# EUROPEAN PATENT SPECIFICATION

(11) **EP 2 547 041 B1**
(45) Date of publication and mention of the grant of the patent: **20.04.2016**
(21) Application number: 10847295.2
(22) Date of filing: 02.12.2010
(51) Int. Cl.: H04L 12/24, H04L 12/437, H04L 12/46

(54) **MULTICAST IMPLEMENTATION METHOD, ACCESS LAYER EQUIPMENT AND SYSTEM UNDER RING NETWORK ARCHITECTURE**
MULICAST-IMPLEMENTIERUNGSVERFAHREN, ZUGANGSSCHICHTGERÄT UND SYSTEM UNTER EINER RINGNETZARCHITEKTUR
PROCÉDÉ DE MISE EN OEUVRE DE MULTIDIFFUSION, ÉQUIPEMENT DE COUCHE D'ACCÈS ET SYSTÈME SOUS ARCHITECTURE DE RÉSEAU EN ANNEAU

(30) Priority: 10.03.2010 CN 201010134543
(43) Date of publication of application: 16.01.2013
(73) Proprietor: Huawei Technologies Co., Ltd., Longgang District Shenzhen, Guangdong 518129 (CN)
(72) Inventor: HUANG, Yueping, Shenzhen Guangdong 518129 (CN); MO, Zengning, Shenzhen Guangdong 518129 (CN)
(74) Representative: Gill Jennings & Every LLP
(86) International application number: PCT/CN2010/079369
(87) International publication number: WO 2011/110037

(56) References cited:
- CN-A- 1 520 094
- CN-A- 101 001 165
- US-B1- 6 976 088
- US-B1- 6 976 088
- US-B1- 7 586 856
- IBANEZ ET AL: "ABridges: Scalable, self-configuring Ethernet campus networks", COMPUTER NETWORKS, ELSEVIER SCIENCE PUBLISHERS B.V., AMSTERDAM, NL, vol. 52, no. 3, 6 November 2007 (2007-11-06), pages 630-649, XP022441504, ISSN: 1389-1286

## Description

### FIELD OF THE INVENTION

The present invention relates to the field of network technologies, and in particular, to a method, an access layer device, and a system for implementing multicast in a ring network architecture.

### BACKGROUND OF THE INVENTION

To ensure stability of the entire network, a ring network architecture is generally formed between an access layer and an aggregation layer, and layer-2 packets from the access network are transmitted between aggregation layer devices transparently. Consequently, a broadcast storm of broadcast packets tends to occur in the ring network. The broadcast storm occupies line bandwidth, and causes Media Access Control (MAC) address flapping. The requirement for solving the problems such as the broadcast storm caused by the ring network gives rise to the Spanning Tree Protocol (STP). The basic concept of the STP is to block certain ports through an STP algorithm so as to simplify the ring network into a tree and protect links at the same time. The Multiple Spanning Tree Protocol (MSTP) can simplify the network topology into multiple trees and let different services travel different paths, which achieves the effect of load sharing.

In the networking of a ring network architecture, the application of the multicast service needs to ensure that multicast group members can join a new topology in time when the network topology changes, and ensure that the multicast service is not interrupted. When the multicast service is based on the MSTP, the multicast application can be implemented properly in the ring network architecture. Specifically, a group member Join/Leave packet is sent to a Root Port (RP) generated by the MSTP, and new multicast distribution path information is generated according to the change of the RP when the network topology changes.

The prior art uses the Rapid Spanning Tree Protocol (RSTP) to detect the change of the network topology, and configures an RP binding mode as the program forwarding mode, namely, sends Internet Group Management Protocol (IGMP) packets from the RP. Multicast data streams are injected from the RP downward, and multicast data is replicated in a Digital Subscriber Line Access Multiplexer (DSLAM).

In the prior art, however, the entire multicast service is interrupted when a link fault occurs on the uplink port of the access layer device connected to the aggregation layer device and the access layer device is a root bridge.

An article entitled "Abridges: Scalable, self-confirguring Ethernet campus networks" by G. Ibáñez et al. describes a scalable, self-configuring architecture for campus networks, the Abridges architecture.

### SUMMARY OF THE INVENTION

Embodiments of the present invention provide a method, an access layer device, and a system for implementing multicast in a ring network architecture to ensure that multicast services can be carried out normally.

In one aspect, an embodiment of the present invention provides a method for implementing multicast in a ring network architecture. The ring network architecture includes a first aggregation layer device, a second aggregation layer device, a first access layer device connected to the first aggregation layer device, and a second access layer device connected to the second aggregation layer device. The first aggregation layer device is connected to the second aggregation layer device, and the first access layer device is connected to the second access layer device. The method includes: setting the first access layer device and the second access layer device as root bridges, wherein a bridge priority of the first access layer device is equal to a bridge priority of the second access layer device; and reducing, by the first access layer device, its own bridge priority of the first access layer device when a fault occurs on a link between the first aggregation layer device and the first access layer device, calculating, by the first access layer device, an RP of the first access layer device through the STP, and sending a multicast Join packet through the RP.

In another aspect, an embodiment of the present invention provides an access layer device used in a ring network architecture, wherein the ring network architecture further comprises a first aggregation layer device, a second aggregation layer device, and a second access layer device, wherein the access layer device connects to the first aggregation layer device and the second access layer device; the first aggregation layer device connects to the second aggregation layer device, and the second aggregation layer device connects to the second access layer device, wherein the access layer device and the second access layer device are set as root bridges, and wherein a bridge priority of the access layer device is equal to a bridge priority of the second access layer device. The access layer device includes: a link detection unit, configured to detect a connection state of a link between the access layer device and the aggregation layer device; a spanning tree unit, configured to reduce a bridge priority of the access layer device when the link detection unit detects a fault on the link, and use the STP to calculate an RP of the access layer device; and a multicast unit, configured to send a multicast Join request packet through the RP.

In still another aspect, an embodiment of the present invention provides a system for implementing multicast in a ring network architecture. The ring network architecture includes a first aggregation layer device, a second aggregation layer device, a first access layer device connected to the first aggregation layer device, and a second access layer device connected to the second aggregation layer device. The first aggregation layer device is connected to the second aggregation layer device, and the first access layer device is connected to the second access layer device. The first access layer device and the second access layer device are root bridges, wherein a bridge priority of the first access layer device is equal to a bridge priority of the second access layer device. The first access layer device is configured to reduce its own bridge priority when a fault occurs on a link between the first access layer device and the first aggregation layer device, calculate its own RP through the STP, and send a multicast Join packet through the RP.

The foregoing technical solutions bring the following benefits: The first access layer device and the second access layer device are set as root bridges, the bridge priority of the first access layer device is reduced when a fault occurs on a link between the first aggregation layer device and the first access layer device, the RP of the first access layer device is calculated through the STP, and a multicast Join packet is sent through the RP. Therefore, when a link fault occurs on the uplink port (UP) of the access layer device connected to the aggregation layer device and the access layer device is a root bridge, the entire multicast service goes on normally without interruption.

### BRIEF DESCRIPTION OF THE DRAWINGS

To make the technical solutions of the embodiments of the present invention or the prior art clearer, the accompanying drawings used in the description of the embodiments or the prior art are briefly described hereunder. Evidently, the accompanying drawings illustrate some exemplary embodiments of the present invention and persons of ordinary skill in the art may obtain other drawings based on these drawings without creative efforts.
FIG. 1 is a schematic diagram of a network structure for implementing multicast in a ring network architecture;
FIG. 2 is a schematic diagram of a network structure for implementing multicast in a ring network architecture according to an embodiment of the present invention;
FIG. 3 is a flow chart of a method for implementing multicast in a ring network architecture according to an embodiment of the present invention;
FIG. 4 is a schematic diagram of a temporary steady state of a ring network architecture for implementing multicast according to an embodiment of the present invention; and
FIG. 5 is a schematic structural diagram of an access layer device according to an embodiment of the present invention.

### DETAILED DESCRIPTION OF THE EMBODIMENTS

The technical solutions in the embodiments of the present invention are hereinafter described clearly and completely with reference to the accompanying drawings. Apparently, the described embodiments are only some exemplary embodiments of the present invention, rather than all the embodiments of the present invention. Based on the embodiments of the present invention, all other embodiments obtained by persons of ordinary skill in the art without making any creative effort shall fall within the protection scope of the present invention.

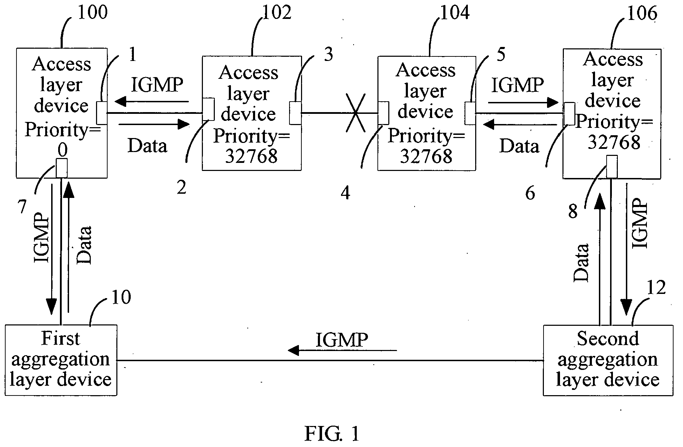

FIG. 1 is a schematic diagram of a network structure for implementing multicast in a ring network architecture. The ring network architecture includes a first aggregation layer device 10, a second aggregation layer device 12, an access layer device 100 (first access layer device) connected to the first aggregation layer device 10, and an access layer device 106 (second access layer device) connected to the second aggregation layer device 12. The first aggregation layer device 10 is connected to the second aggregation layer device 12, and the access layer device 100 is connected to the access layer device 106 (the access layer device 100 may be connected to the access layer device 106 directly or through another access layer device, for example, through an access layer device 102 or an access layer device 104 shown in FIG. 1). Ports 1, 3, and 6 are Designated Ports (DPs), ports 2, 5, and 8 are RPs, port 4 is a Blocked (BLK) Port, and ports 7 and 8 are UPs. The prior art uses the RSTP to detect the change of the network topology, and configures the uplink forwarding mode of multicast control packets (such as IGMP packets) of the access layer device 100 and the access layer device 106 as an RP binding mode, that is, set that the IGMP packets are sent from the RP. Multicast data streams are sent to the RP through the DP. When a fault occurs on the link between the access layer device 102 and the access layer device 104, the RSTP performs recalculation to generate a new topology, and calculates a new RP (port 4). The access layer device 104 sends an IGMP Join packet through the new RP (port 4), and the multicast data streams are injected from the access layer device 102 into the access layer device 104. The solution in the prior art can solve the problem caused by the fault between the access layer devices, but cannot solve the problem caused by the fault between the access layer device and the aggregation layer device. For example, when the access layer device 100 is a root bridge (namely, a device of the highest bridge priority), after an uplink fault on the access layer device 100, the entire multicast service is interrupted.

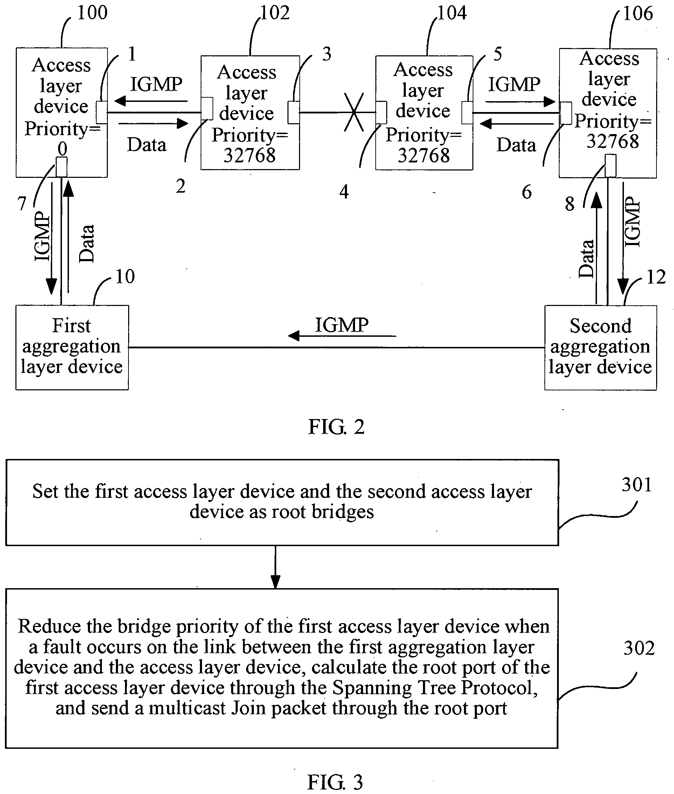

FIG. 2 is a schematic diagram of a network structure for implementing multicast in a ring network architecture according to an embodiment of the present invention. All access layer devices (100 to 106) run the RSTP/MSTP. First, the uplink forwarding mode of multicast control packets of the access layer device 100 and the access layer device 106 is set as an RP binding mode. Therefore, through this setting, the IGMP packet of the access layer device is sent from the RP, and the access layer device that fails to obtain the RP (such as the access layer device 100) sends the IGMP packet from the configured UP. In the architecture in this embodiment of the present invention, two access layer devices connected to the aggregation layer device are set as root bridges. In FIG. 2, the root bridges are the access layer device 100 and the access layer device 106. In this way, when a fault occurs on the link between an access layer device and an aggregation layer device, the other root bridge can continue working. The method provided in an embodiment of the present invention is hereinafter described in detail. FIG. 3 is a flow chart of a method for implementing multicast in a ring network architecture according to an embodiment of the present invention. The method includes:
Step 301: Set the access layer device 100 and the access layer device 106 as root bridges.
   The method for setting the access layer device 100 and the access layer device 106 as root bridges may be: setting the bridge priority of the access layer device 100 to be equal to the bridge priority of the access layer device 106 and higher than the bridge priorities of other access layer devices. For example, the bridge priority of the access layer device 100 and the bridge priority of the access layer device 106 are set to 0, and the bridge priorities of other access layer devices (102 and 104) are set to 32768. The port for connecting the access layer device 100 and the first aggregation layer 10 is set as an UP, and the port for connecting the access layer device 106 and the second aggregation layer device 12 is set as an UP. The distribution of the multicast data stream is shown in FIG. 2. One path is: the first aggregation layer device 10 - the access layer device 100 - the access layer device 102; and the other path is: the second aggregation layer device 12 - the access layer device 106 - the access layer device 104.
   Optionally, the types of the aggregation layer device may include a router, and the types of the access layer device may include a DSLAM. This embodiment of the present invention is not limited thereto.
Step 302: Reduce the bridge priority of the access layer device 100 when a fault occurs on the link between the first aggregation layer device 10 and the access layer device 100, calculate the RP of the access layer device 100 through the STP, and send a multicast Join packet through the RP. When a fault occurs on the link between the first aggregation layer device 10 and the access layer device 100, the bridge priority of the access layer device 100 is reduced, for example, the bridge priority of the access layer device 100 is adjusted to 4096 or 32768, or a value smaller than 32768. It should be noted that the value of the bridge priority in the present invention is not limited to the specific implementation examples of the bridge priority.

After the bridge priority of the access layer device 100 is adjusted, the access layer device 100 recalculates the RP of the access layer device 100 through the STP. Because the bridge priority is reduced, the original DP may be changed into an RP such as port 1. When the access layer device 100 is a root bridge, port 1 is the RP of the access layer device 102. After the bridge priority of the access layer device 100 is reduced, port 1 may be changed into an RP after the recalculation through the STP.

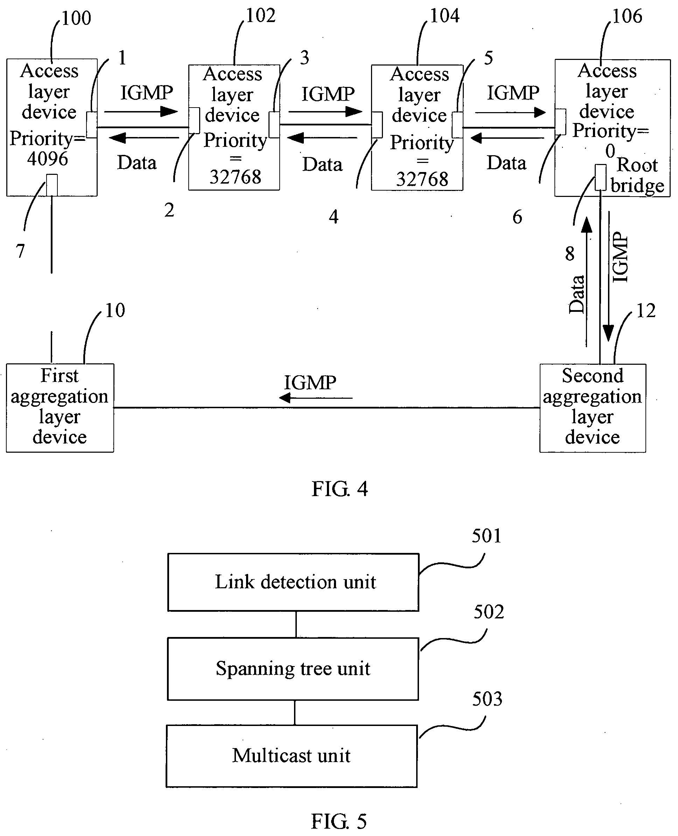

Optionally, the multicast Join packet may include an IGMP Join packet. After the RP of the access layer device 100 is calculated through the STP, the method may further include: sending an STP packet through the RP (port 1). Corresponding to FIG. 2, the bridge priority of the STP packet sent by the access layer device 100 changes accordingly. After the access layer device 102 receives the STP packet from the access layer device 100, a new RP is calculated through the STP algorithm, port 3 is changed from a DP to an RP, and port 2 is changed from an RP to a DP. The port adjustment process is a process in which the STP reselects the RP according to the STP packet, and is covered in the STP standard. In the process in which the network topology gets steady, a temporary steady state exists until port 8 of the access layer device 106 detects timeout of the STP packet (in the temporary steady state, the RSTP/MSTP module is required to parse the STP packet correctly, namely, determines a DP whose root bridge is the current bridge and whose bridge priority is different from that of the current bridge, and this state is to ensure fast switching of the service without waiting until timeout). The temporary steady state is kept before port 8 of the access layer device 106 detects timeout of the STP. FIG. 4 is a schematic diagram of a temporary steady state of a ring network architecture for implementing multicast according to an embodiment of the present invention. The DPs of the access layer device 100 and the access layer device 102 are switched to RPs. In this case, for example, the access layer device 102 sends an IGMP Leave packet through the old RP (port 2), and sends an IGMP Join packet through a new RP (port 3), respectively, thereby refreshing the multicast distribution path information. FIG. 4 shows the distribution of multicast data streams in a temporary steady state. The path for distributing the multicast data streams is: the second aggregation layer device 12 - the access layer device 106 - the access layer device 104 - the access layer device 102 - the access layer device 100. When the link between the access layer device 100 and the first aggregation layer device is recovered, the bridge priority of the access layer device 100 is modified so that the access layer device 100 becomes a root bridge. For example, the bridge priority of the access layer device 100 is reset to 0, and the network topology is recovered to the topology shown in FIG. 2.

The method embodiment of the present invention can adjust the bridge priority of the access layer device automatically according to the state of the link between the access layer device and the aggregation layer device, recalculate the RP of the access layer device through the STP, and send a multicast Join packet through the RP to generate a new multicast distribution path. Therefore, when a link fault occurs on the uplink port of the access layer device connected to the aggregation layer device and the access layer device is a root bridge, the entire multicast service goes on normally without interruption.

Corresponding to the foregoing method embodiment, FIG. 5 is a schematic structural diagram of an access layer device according to an embodiment of the present invention. One side of the access layer device is connected to an aggregation layer device, and the other side is connected to another access layer device. The access layer device includes:
a link detection unit 501, configured to detect a connection state of a link between the access layer device and the aggregation layer device;
a spanning tree unit 502, configured to reduce a bridge priority of the access layer device when the link detection unit 501 detects a fault on the link, and use the STP to calculate an RP of the access layer device; and
a multicast unit 503, configured to send a multicast Join request packet through the RP. Optionally, the multicast unit 503 is further configured to send an STP packet through the RP.

In addition, an embodiment of the present invention further provides a system for implementing multicast in a ring network architecture. The ring network architecture includes a first aggregation layer device, a second aggregation layer device, a first access layer device connected to the first aggregation layer device, and a second access layer device connected to the second aggregation layer device. The first aggregation layer device is connected to the second aggregation layer device, and the first access layer device is connected to the second access layer device. The uplink forwarding mode of multicast control packets of the first access layer device and the second access layer device is an RP binding mode, and the first access layer device and the second access layer device are root bridges. The first access layer device is configured to reduce its own bridge priority when a fault occurs on a link between the first access layer device and the first aggregation layer device, calculate its own RP through the STP, and send a multicast Join packet through the RP. Optionally, the other access layer devices may include a third access layer device. The third access layer device is configured to receive an STP packet from the first access layer device, calculate the RP of the third access layer device according to the STP packet, and refresh the multicast distribution path. The first access layer device is further configured to modify the bridge priority of the first access layer device so that the first access layer device becomes a root bridge when the link between the first access layer device and the first aggregation layer device is recovered. The types of the aggregation layer device may include a router, and the types of the access layer device may include a DSLAM. This embodiment of the present invention is not limited thereto.

The apparatus embodiment of the present invention can adjust the bridge priority of the access layer device automatically according to the state of the link between the access layer device and the aggregation layer device, recalculate the RP of the access layer device through the STP, and send a multicast Join packet through the RP to generate a new multicast distribution path. Therefore, when a link fault occurs on the uplink port of the access layer device connected to the aggregation layer device and the access layer device is a root bridge, the entire multicast service goes on normally without interruption.

Persons of ordinary skill in the art should understand that all or part of the steps of the method specified in any embodiment above may be implemented by a program instructing relevant hardware. The program may be stored in a computer readable storage medium such as a ROM/RAM, a magnetic disk or a CD-ROM. When the program runs, the program executes all or part of the steps described above.

The objectives, technical solutions, and benefits of the embodiments of the present invention are described in detail above. Although the present invention is described in detail with reference to some embodiments, those embodiments are not intended to limit the protection scope of the present invention. Any modification, equivalent replacement, or improvement made to the embodiments of the present invention without departing from the principles of the present invention shall fall into the protection scope of the present invention.

## Claims

1. A method for implementing multicast in a ring network architecture, wherein the ring network architecture comprises a first aggregation layer device, a second aggregation layer device, a first access layer device connected to the first aggregation layer device, and a second access layer device connected to the second aggregation layer device; the first aggregation layer device being connected to the second aggregation layer device, and the first access layer device being connected to the second access layer device; the method comprises:
setting the first access layer device and the second access layer device as root bridges, wherein a bridge priority of the first access layer device is equal to a bridge priority of the second access layer device; and
reducing, by the first access layer device, its own bridge priority when a fault occurs on a link between the first aggregation layer device and the first access layer device;
calculating, by the first access layer device, a root port, hereafter called RP, of the first access layer device through the Spanning Tree Protocol, hereafter called STP, and
sending, by the first access layer device, a multicast Join packet through the RP.

2. The method according to claim 1, wherein types of the multicast Join packet comprise an Internet Group Management Protocol, hereafter IGMP, Join packet.

3. The method according to claim 1, wherein after the RP of the first access layer device is calculated through the STP, the method further comprises: sending an STP packet through the RP.

4. The method according to any one of claims 1 to 3, further comprising:
modifying the bridge priority of the first access layer device so that the first access layer device becomes a root bridge when the link between the first access layer device and the first aggregation layer device is recovered.

5. The method according to claim 4, wherein types of the aggregation layer device comprise a router, and types of the access layer device comprise a digital subscriber line access multiplexer, hereafter called DSLAM.

6. An access layer device used in a ring network architecture, wherein the ring network architecture further comprises a first aggregation layer device, a second aggregation layer device, and a second access layer device, wherein the access layer device connects to the first aggregation layer device and the second access layer device; the first aggregation layer device connects to the second aggregation layer device, and the second aggregation layer device connects to the second access layer device,
the access layer device and the second access layer device are set as root bridges, wherein a bridge priority of the access layer device is equal to a bridge priority of the second access layer device, wherein the access layer device comprises:
a link detection unit, configured to detect a connection state of a link between the access layer device and the aggregation layer device;
a spanning tree unit, configured to reduce a bridge priority of the access layer device when the link detection unit detects a fault on the link, and use the Spanning Tree Protocol, STP, to calculate a root port, RP, of the access layer device; and
a multicast unit, configured to send a multicast Join request packet through the RP.

7. The device according to claim 6, wherein the multicast unit is further configured to send an STP packet through the RP.

8. The device according to claim 6 or 7, wherein the access layer device is a digital subscriber line access multiplexer.

9. A system for implementing multicast in a ring network architecture, wherein the ring network architecture comprises a first aggregation layer device, a second aggregation layer device, a first access layer device connected to the first aggregation layer device, and a second access layer device connected to the second aggregation layer device; the first aggregation layer device is connected to the second aggregation layer device, and the first access layer device is connected to the second access layer device; and the first access layer device and the second access layer device are root bridges, and that a bridge priority of the first access layer device is equal to a bridge priority of the second access layer device; and
the first access layer device is configured to reduce its own bridge priority when a fault occurs on a link between the first access layer device and the first aggregation layer device, calculate its own root port, RP, through the Spanning Tree Protocol, STP, and send a multicast Join packet through the RP.

10. The system according to claim 9, wherein system further comprises a third access layer device; and
the third access layer device is configured to receive an STP packet from the first access layer device, calculate an RP of the third access layer device according to the STP packet, and refresh a multicast distribution path.

11. The system according to claim 9 or claim 10, wherein the first access layer device is further configured to modify the bridge priority of the first access layer device so that the first access layer device becomes a root bridge when the link between the first access layer device and the first aggregation layer device is recovered.

## Patentansprüche

1. Verfahren zum Implementieren von "Multicast" in einer Ringnetzwerkarchitektur, wobei die Ringnetzwerkarchitektur eine erste Aggregationsschichtvorrichtung, eine zweite Aggregationsschichtvorrichtung, eine mit der ersten Aggregationsschichtvorrichtung verbundene erste Zugangsschichtvorrichtung und eine mit der zweiten Aggregationsschichtvorrichtung verbundene zweite Zugangsschichtvorrichtung umfasst; wobei die erste Aggregationsschichtvorrichtung mit der zweiten Aggregationsschichtvorrichtung verbunden ist und die erste Zugangsschichtvorrichtung mit der zweiten Zugangsschichtvorrichtung verbunden ist; wobei das Verfahren Folgendes umfasst:
Setzen der ersten Zugangsschichtvorrichtung und der zweiten Zugangsschichtvorrichtung als Wurzelbrücken, wobei eine Brückenpriorität der ersten Zugangsschichtvorrichtung gleich einer Brückenpriorität der zweiten Zugangsschichtvorrichtung ist; und
die erste Zugangsschichtvorrichtung verringert ihre eigene Brückenpriorität, wenn ein Fehler auf einer Strecke zwischen der ersten Aggregationsschichtvorrichtung und der ersten Zugangsschichtvorrichtung auftritt;
die erste Zugangsschichtvorrichtung berechnet einen im Folgenden als RP bezeichneten Wurzelport der ersten Zugangsschichtvorrichtung mittels des im Folgenden als STP bezeichneten "Spanning Tree Protocol" und
die erste Zugangsschichtvorrichtung sendet ein "Multicast-Join"-Paket mittels des RP.

2. Verfahren nach Anspruch 1, wobei Arten des "Multicast-Join"-Pakets ein "Join"-Paket des im Folgenden als IGMP bezeichneten "Internet Group Management Protocol" umfassen.

3. Verfahren nach Anspruch 1, wobei das Verfahren, nachdem der RP der ersten Zugangsschichtvorrichtung mittels des STP berechnet wird, ferner Senden eines STP-Pakets mittels des RP umfasst.

4. Verfahren nach einem der Ansprüche 1 bis 3, ferner umfassend:
Modifizieren der Brückenpriorität der ersten Zugangsschichtvorrichtung dergestalt, dass die erste Zugangsschichtvorrichtung eine Wurzelbrücke wird, wenn die Strecke zwischen der ersten Zugangsschichtvorrichtung und der ersten Aggregationsschichtvorrichtung wiederhergestellt wird.

5. Verfahren nach Anspruch 4, wobei Arten der Aggregationsschichtvorrichtung einen Router umfassen und Arten der Zugangsschichtvorrichtung einen im Folgenden als DSLAM bezeichneten "Digital Subscriber Line Access Multiplexer" umfassen.

6. Zugangsschichtvorrichtung, die in einer Ringnetzwerkarchitektur verwendet wird, wobei die Ringnetzwerkarchitektur ferner eine erste Aggregationsschichtvorrichtung, eine zweite Aggregationsschichtvorrichtung und eine zweite Zugangsschichtvorrichtung umfasst, wobei die Zugangsschichtvorrichtung an die erste Aggregationsschichtvorrichtung und die zweite Zugangsschichtvorrichtung angeschlossen ist; die erste Aggregationsschichtvorrichtung an die zweite Aggregationsschichtvorrichtung angeschlossen ist und die zweite Aggregationsschichtvorrichtung an die zweite Zugangsschichtvorrichtung angeschlossen ist, wobei die Zugangsschichtvorrichtung und die zweite Zugangsschichtvorrichtung als Wurzelbrücken gesetzt werden, wobei eine Brückenpriorität der Zugangsschichtvorrichtung gleich einer Brückenpriorität der zweiten Zugangsschichtvorrichtung ist, wobei die Zugangsschichtvorrichtung Folgendes umfasst:
eine Streckendetektionseinheit, ausgelegt zum Detektieren eines Verbindungszustands einer Strecke zwischen der Zugangsschichtvorrichtung und der Aggregationsschichtvorrichtung;
eine "Spanning Tree"-Einheit, ausgelegt zum Verringern einer Brückenpriorität der Zugangsschichtvorrichtung, wenn die Streckendetektionseinheit einen Fehler auf der Strecke detektiert, und Verwenden des "Spanning Tree Protocol" STP zur Berechnung eines Wurzelports RP der Zugangsschichtvorrichtung; und
eine "Multicast"-Einheit, ausgelegt zum Senden eines "Multicast-Join"-Anforderungspakets mittels des RP.

7. Vorrichtung nach Anspruch 6, wobei die "Multicast"-Einheit ferner ausgelegt ist zum Senden eines STP-Pakets mittels des RP.

8. Vorrichtung nach Anspruch 6 oder 7, wobei die Zugangsschichtvorrichtung ein "Digital Subscriber Line Access Multiplexer" ist.

9. System zum Implementieren von "Multicast" in einer Ringnetzwerkarchitektur, wobei die Ringnetzwerkarchitektur eine erste Aggregationsschichtvorrichtung, eine zweite Aggregationsschichtvorrichtung, eine mit der ersten Aggregationsschichtvorrichtung verbundene erste Zugangsschichtvorrichtung und eine mit der zweiten Aggregationsschichtvorrichtung verbundene zweite Zugangsschichtvorrichtung umfasst; wobei die erste Aggregationsschichtvorrichtung mit der zweiten Aggregationsschichtvorrichtung verbunden ist und die erste Zugangsschichtvorrichtung mit der zweiten Zugangsschichtvorrichtung verbunden ist; und die erste Zugangsschichtvorrichtung und die zweite Zugangsschichtvorrichtung Wurzelbrücken sind, und eine Brückenpriorität der ersten Zugangsschichtvorrichtung gleich einer Brückenpriorität der zweiten Zugangsschichtvorrichtung ist; und
die erste Zugangsschichtvorrichtung ausgelegt ist zum Verringern ihrer eigenen Brückenpriorität, wenn ein Fehler auf einer Strecke zwischen der ersten Zugangsschichtvorrichtung und der ersten Aggregationsschichtvorrichtung auftritt, Berechnen ihres eigenen Wurzelports RP mittels des "Spanning Tree Protocol" STP und Senden eines "Multicast-Join"-Pakets mittels des RP.

10. System nach Anspruch 9, wobei das System ferner eine dritte Zugangsschichtvorrichtung umfasst; und
die dritte Zugangsschichtvorrichtung ausgelegt ist zum Empfangen eines STP-Pakets von der ersten Zugangsschichtvorrichtung, Berechnen eines RP der dritten Zugangsschichtvorrichtung gemäß dem STP-Paket und Auffrischen eines "Multicast"-Verteilungspfads.

11. System nach Anspruch 9 oder Anspruch 10, wobei die erste Zugangsschichtvorrichtung ferner ausgelegt ist zum Modifizieren der Brückenpriorität der ersten Zugangsschichtvorrichtung dergestalt, dass die erste Zugangsschichtvorrichtung eine Wurzelbrücke wird, wenn die Strecke zwischen der ersten Zugangsschichtvorrichtung und der ersten Aggregationsschichtvorrichtung wiederhergestellt wird.

## Revendications

1. Procédé permettant de mettre en oeuvre une multidiffusion dans une architecture de réseau en anneau, l'architecture de réseau en anneau comportant un premier dispositif de couche d'agrégation, un deuxième dispositif de couche d'agrégation, un premier dispositif de couche d'accès connecté au premier dispositif de couche d'agrégation, et un deuxième dispositif de couche d'accès connecté au deuxième dispositif de couche d'agrégation ; le premier dispositif de couche d'agrégation étant connecté au deuxième dispositif de couche d'agrégation, et le premier dispositif de couche d'accès étant connecté au deuxième dispositif de couche d'accès ; le procédé comprenant les étapes suivantes :
définir le premier dispositif de couche d'accès et le deuxième dispositif de couche d'accès comme des ponts racines, une priorité de pont du premier dispositif de couche d'accès étant égale à une priorité de pont du deuxième dispositif de couche d'accès ; et
réduire, par le premier dispositif de couche d'accès, sa propre priorité de pont en cas de défaillance sur une liaison entre le premier dispositif de couche d'agrégation et le premier dispositif de couche d'accès ;
calculer, par le premier dispositif de couche d'accès, un port racine, appelé ci-après RP, du premier dispositif de couche d'accès par l'intermédiaire du protocole Spanning Tree, appelé ci-après STP, et
envoyer, par le premier dispositif de couche d'accès, un paquet Joindre de multidiffusion par l'intermédiaire du RP.

2. Procédé selon la revendication 1, dans lequel les types du paquet Joindre de multidiffusion comprennent un paquet Joindre du protocole de gestion de groupe Internet, ci-après IGMP.

3. Procédé selon la revendication 1, dans lequel après que le RP du premier dispositif de couche d'accès a été calculé par l'intermédiaire du STP, le procédé comprend en outre : envoyer un paquet STP par l'intermédiaire du RP.

4. Procédé selon l'une quelconque des revendications 1 à 3, comprenant en outre l'étape suivante :
modifier la priorité de pont du premier dispositif de couche d'accès de sorte que le premier dispositif de couche d'accès devienne un pont racine lorsque la liaison entre le premier dispositif de couche d'accès et le premier dispositif de couche d'agrégation est récupérée.

5. Procédé selon la revendication 4, dans lequel les types du dispositif de couche d'agrégation comprennent un routeur, les types du dispositif de couche d'accès comprenant un multiplexeur d'accès de ligne d'abonné numérique, appelé ci-après DSLAM.

6. Dispositif de couche d'accès utilisé dans une architecture de réseau en anneau, l'architecture de réseau en anneau comprenant en outre un premier dispositif de couche d'agrégation, un deuxième dispositif de couche d'agrégation, et un deuxième dispositif de couche d'accès, le dispositif de couche d'accès se connectant au premier dispositif de couche d'agrégation et au deuxième dispositif de couche d'accès ; le premier dispositif de couche d'agrégation se connectant au deuxième dispositif de couche d'agrégation, et le deuxième dispositif de couche d'agrégation se connectant au deuxième dispositif de couche d'accès,
le dispositif de couche d'accès et le deuxième dispositif de couche d'accès étant définis comme des ponts racines, une priorité de pont du dispositif de couche d'accès étant égale à une priorité de pont du deuxième dispositif de couche d'accès, le dispositif de couche d'accès comprenant :
une unité de détection de liaison, configurée pour détecter un état de connexion d'une liaison entre le dispositif de couche d'accès et le dispositif de couche d'agrégation ;
une unité d'arbre recouvrant, configurée pour réduire une priorité de pont du dispositif de couche d'accès lorsque l'unité de détection de liaison détecte une défaillance sur la liaison, et pour utiliser le protocole Spanning Tree, STP, afin de calculer un port racine, RP, du dispositif de couche d'accès ; et
une unité de multidiffusion, configurée pour envoyer un paquet de requête Joindre de multidiffusion par l'intermédiaire du RP.

7. Dispositif selon la revendication 6, dans lequel l'unité de multidiffusion est en outre configurée pour envoyer un paquet STP par l'intermédiaire du RP.

8. Dispositif selon la revendication 6 ou 7, dans lequel le dispositif de couche d'accès est un multiplexeur d'accès de ligne d'abonné numérique.

9. Système permettant de mettre en oeuvre une multidiffusion dans une architecture de réseau en anneau, l'architecture de réseau en anneau comportant un premier dispositif de couche d'agrégation, un deuxième dispositif de couche d'agrégation, un premier dispositif de couche d'accès connecté au premier dispositif de couche d'agrégation, et un deuxième dispositif de couche d'accès connecté au deuxième dispositif de couche d'agrégation ; le premier dispositif de couche d'agrégation étant connecté au deuxième dispositif de couche d'agrégation, et le premier dispositif de couche d'accès étant connecté au deuxième dispositif de couche d'accès ; et le premier dispositif de couche d'accès et le deuxième dispositif de couche d'accès étant des ponts racines, et une priorité de pont du premier dispositif de couche d'accès étant égale à une priorité de pont du deuxième dispositif de couche d'accès ; et
le premier dispositif de couche d'accès étant configuré pour réduire sa propre priorité de pont en cas de défaillance sur une liaison entre le premier dispositif de couche d'accès et le premier dispositif de couche d'agrégation, pour calculer son propre port racine, RP, par l'intermédiaire du protocole Spanning Tree, STP, et pour envoyer un paquet Joindre de multidiffusion par l'intermédiaire du RP.

10. Système selon la revendication 9, dans lequel le système comprend en outre un troisième dispositif de couche d'accès ; et
le troisième dispositif de couche d'accès est configuré pour recevoir un paquet STP à partir du premier dispositif de couche d'accès, calculer un RP du troisième dispositif de couche d'accès selon le paquet STP, et rafraîchir un chemin de distribution de multidiffusion.

11. Système selon la revendication 9 ou selon la revendication 10, dans lequel le premier dispositif de couche d'accès est en outre configuré pour modifier la priorité de pont du premier dispositif de couche d'accès de sorte que le premier dispositif de couche d'accès devienne un pont racine lorsque la liaison entre le premier dispositif de couche d'accès et le premier dispositif de couche d'agrégation est récupérée.
